# FASCICULE DE BREVET EUROPEEN

(11) **EP 4 164 944 B1**
(45) Date de publication et mention de la délivrance du brevet: **19.06.2024**
(21) Numéro de dépôt: 21739163.0
(22) Date de dépôt: 14.06.2021
(51) Int. Cl.: B64C 11/06, B64C 11/28

(54) **ENSEMBLE PROPULSIF A HELICE A PALES REPLIABLES ET PROCEDE DE REPLIEMENT DES PALES**
PROPELLERANORDNUNG MIT FALTBAREN BLÄTTERN UND VERFAHREN ZUM FALTEN DER BLÄTTER
PROPELLER ASSEMBLY WITH FOLDING BLADES AND METHOD FOR FOLDING THE BLADES

(30) Priorité: 16.06.2020 FR 2006281
(43) Date de publication de la demande: 19.04.2023
(73) Titulaire: Safran Helicopter Engines, 64510 Bordes (FR)
(72) Inventeur: BESSE, Jean-Louis Robert Guy, 77550 MOISSY-CRAMAYEL (FR); SERGHINE, Camel, 77550 MOISSY-CRAMAYEL (FR)
(74) Mandataire: Gevers & Orès
(86) Numéro de dépôt international: PCT/FR2021/051058
(87) Numéro de publication internationale: WO 2021/255374

(56) Documents cités:
- WO-A1-2017/162561
- US-A1- 2019 016 441

## Description

### Domaine technique de l'invention

L'invention se rapporte à un ensemble propulsif à hélice pour un aéronef comportant :
- une nacelle qui est destinée à être fixée sur un élément de structure de l'aéronef ;
- une hélice qui est montée rotative dans la nacelle autour d'un axe de rotation longitudinal par l'intermédiaire d'un moyeu, l'hélice comportant des pales dont chacune est montée solidaire en pivotement avec un fût de pale associé qui est monté pivotant autour d'un axe radial de calage par rapport au moyeu, et chaque pale étant montée pivotante par rapport au fût de pale autour d'un axe de repliement orthogonal à l'axe radial de calage ;
- un dispositif de repliement qui comporte un actionneur de repliement commandant le pivotement de chaque pale par rapport à son fût de pale entre une position déployée dans laquelle les pales s'étendent radialement par rapport à l'axe de rotation et une position repliée dans laquelle les pales s'étendent globalement longitudinalement contre la nacelle.

### Arrière-plan technique

De tels ensembles propulsifs à hélice sont par exemple utilisés dans des aéronefs à décollage et atterrissage verticaux, aussi appelés "VTOL", acronyme anglais de "Vertical Take Off and Landing". Bien entendu, il est aussi possible d'utiliser de tels ensembles propulsifs dans des aéronefs à voilure fixe, aussi connus sous l'appellation "CTOL", acronyme anglais de "Classic Take Off and Landing". Dans ce cadre, il est possible d'équiper l'aéronef de plusieurs ensembles propulsifs à hélice de façon à répartir les foyers de poussée et rechercher les meilleurs rendements propulsifs sur l'aéronef.

Ces ensembles propulsifs à hélice peuvent être désactivés en fonction de la configuration de vol de l'aéronef. Lorsque des ensembles propulsifs à hélice sont désactivés, leur hélice est susceptible de nuire aux performances aérodynamiques de l'aéronef, par exemple en créant une force de trainée, ou encore en créant des perturbations locales dans les écoulements d'air.

Pour résoudre ce problème, il a déjà été proposé des ensembles propulsifs équipés d'hélices à pales repliables afin de soustraire au mieux ces pales non actives de l'écoulement local.

Cependant, les dispositifs de repliement existants sont susceptibles d'exercer un effort sur l'axe de repliement des pales lorsque le repliement est accidentellement déclenché alors que ces dernières n'occupent pas une position calage déterminée de repliement. Un tel dispositif est par exemple divulgué dans le document WO 2017/162561 A1.

Le document US 2019/016441 A1 divulgue un dispositif de repliement comportant un organe de commande formé par un levier monté sur un fût de pale qui coopère avec une première biellette reliée à la pale et actionnée par un actionneur à plateau oscillant par l'intermédiaire d'une deuxième biellette.

### Résumé de l'invention

L'invention propose un ensemble propulsif à hélice pour un aéronef comportant :
- une nacelle qui est destinée à être fixée sur un élément de structure de l'aéronef ;
- une hélice qui est montée rotative dans la nacelle autour d'un axe de rotation longitudinal par l'intermédiaire d'un moyeu, l'hélice comportant des pales dont chacune est montée solidaire en pivotement avec un fût de pale associé qui est monté pivotant autour d'un axe radial de calage par rapport au moyeu, et chaque pale étant montée pivotante par rapport au fût de pale autour d'un axe de repliement orthogonal à l'axe radial de calage ;
- un dispositif de repliement qui comporte un actionneur de repliement commandant le pivotement de chaque pale par rapport à son fût de pale entre une position déployée dans laquelle les pales s'étendent radialement par rapport à l'axe de rotation et une position repliée dans laquelle les pales s'étendent globalement longitudinalement contre la nacelle ;

le dispositif de repliement comportant une transmission associée à chaque pale, chaque transmission comportant un organe mobile de commande qui est monté solidaire en rotation avec le fût de pale et qui est mu par l'actionneur de repliement, et une biellette comportant une première extrémité montée pivotante sur un pied de la pale associée de manière excentrée par rapport à l'axe de repliement et une deuxième extrémité montée pivotante sur l'organe mobile de commande,
caractérisé en ce que l'organe mobile de commande est formé par une manivelle qui est montée pivotante dans le fût de pale autour d'un axe de commande parallèle à l'axe de repliement, et en ce que le pivotement de l'organe mobile de commande est actionné au moyen d'un engrènement entre un secteur denté de la manivelle et une crémaillère qui est montée coulissante longitudinalement et mue par l'actionneur de repliement.

Un tel dispositif de repliement permet de garantir que la biellette sollicitera la pale en pivotement autour de son axe de repliement, sans forcer sur ce dernier, quelle que soit la position angulaire de calage occupée par la pale.

Selon une autre caractéristique de l'ensemble propulsif selon l'invention, toutes les crémaillères de chacune des transmissions sont fixées sur une tige commune de l'actionneur de repliement qui est coulissante le long de l'axe de rotation entre une première position correspondant à la position déployée des pales et une deuxième position correspondant à la position repliée des pales.

Selon une autre caractéristique de l'ensemble propulsif selon l'invention, il comporte un dispositif de détection de la position de la tige d'actionneur dans sa première position et dans deuxième position. Cette caractéristique permet au pilote et/ou à l'unité électronique de commande de l'aéronef de connaître la position des pales de l'hélice et, le cas échéant, de détecter un dysfonctionnement.

Selon une autre caractéristique de l'ensemble propulsif selon l'invention, il comporte un dispositif de verrouillage mécanique de la tige d'actionneur dans sa première position et dans sa deuxième position. Cette caractéristique permet de garantir que les pales demeurent dans leur position déployée ou repliée, en évitant tout pivotement involontaire des pales.

L'invention concerne aussi un procédé de repliement des pales d'une hélice d'un ensemble propulsif réalisé selon les enseignements de l'invention, caractérisé en ce qu'il comporte une étape de repliement lors de laquelle les pales sont repliées au moyen du dispositif de repliement, puis une étape de vérification du repliement, au cours de laquelle on vérifie que les pales sont bien repliées au moyen du dispositif de détection.

Selon une autre caractéristique du procédé, si, lors de l'étape de vérification du repliement, les pales sont détectées comme étant en position repliée, le dispositif de verrouillage mécanique est commandé pour verrouiller les pales en position repliée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue en perspective qui représente un aéronef équipé de plusieurs ensembles propulsifs à hélice réalisés selon les enseignements de l'invention.
La figure 2 est une vue de profil qui représente un ensemble propulsif de sustentation de l'aéronef de la figure 1 dans lequel les pales de l'hélice sont déployées dans une position angulaire de calage permettant une poussée de sustentation.
La figure 3 est une vue similaire à celle de la figure 2 dans laquelle les pales de l'hélice sont déployées dans une position angulaire de calage de repliement.
La figure 4 est une vue similaire à celle de la figure 2 dans laquelle les pales de l'hélice sont repliées.
La figure 5 est une vue en coupe axiale selon le plan de coupe 5-5 de la figure 10 qui représente la partie tournante d'un ensemble propulsif de traction dans lequel les pales de l'hélice sont déployées dans une position angulaire de calage permettant une poussée de sustentation, l'ensemble propulsif de traction étant muni d'un dispositif de repliement réalisé selon un premier mode de réalisation de l'invention.
La figure 6 est une vue en coupe axiale selon le plan de coupe 6-6 de la figure 12 qui représente la partie tournante d'un ensemble propulsif de traction dans lequel les pales de l'hélice sont déployées dans une position angulaire de calage de repliement, l'ensemble propulsif de traction étant muni du dispositif de repliement réalisé selon le premier mode de réalisation.
La figure 7 est une vue en coupe axiale selon le plan de coupe 7-7 de la figure 13 qui représente la partie tournante d'un ensemble propulsif de traction dans lequel les pales de l'hélice sont repliées, l'ensemble propulsif de traction étant muni du dispositif de repliement réalisé selon le premier mode de réalisation.
La figure 8 est une vue similaire à celle de la figure 6 dans laquelle l'ensemble propulsif de traction est muni d'un dispositif de repliement réalisé selon un exemple, qui ne fait pas partie de l'invention.
La figure 9 est une vue similaire à celle de la figure 7 dans laquelle l'ensemble propulsif de traction est muni du dispositif de repliement réalisé selon l'exemple, qui ne fait pas partie de l'invention.
La figure 10 est une vue de face qui représente un ensemble propulsif de traction de l'aéronef de la figure 1 dans lequel les pales de l'hélice sont déployées dans une position angulaire de calage permettant une poussée de sustentation, l'hélice occupant une position angulaire quelconque autour de son axe de rotation.
La figure 11 est une vue similaire à celle de la figure 10 qui représente les pales de l'hélice déployées dans une position angulaire de calage de repliement, l'hélice occupant une position angulaire quelconque autour de son axe de rotation.
La figure 12 est une vue similaire à celle de la figure 11 qui représente les pales de l'hélice déployées dans une position angulaire de calage de repliement, l'hélice occupant une position angulaire indexée autour de son axe de rotation.
La figure 13 est une vue similaire à celle de la figure 12 qui représente les pales de l'hélice repliées dans des logements de la nacelle.
La figure 14 est une vue de profil qui représente schématiquement une partie tournante d'un ensemble propulsif de l'aéronef de la figure 1 selon une première configuration dans laquelle l'hélice est entraînée par un moteur électrique distinct d'un moteur pas à pas.
La figure 15 est une vue similaire à celle de la figure 14 dans laquelle l'ensemble propulsif est réalisé selon une deuxième configuration dans laquelle l'hélice est entraînée par un moteur à combustion distinct d'un moteur pas à pas.
La figure 16 est une vue similaire à celle de la figure 14 dans laquelle l'ensemble propulsif est réalisé selon une troisième configuration dans laquelle l'hélice est entraînée par un moteur pas à pas.
La figure 17 est une vue en coupe radiale selon la plan de coupe 17-17 de la figure 14 qui représente le moteur pas à pas selon un premier mode de réalisation.
La figure 18 est une vue similaire à celle de la figure 17 qui représente le moteur pas à pas selon un deuxième mode de réalisation.
La figure 19 est une vue similaire à celle de la figure 17 qui représente le moteur pas à pas selon un troisième mode de réalisation.
La figure 20 est une vue en perspective qui représente un rotor du moteur pas à pas de la figure 19.
La figure 21 est une vue en perspective qui représente le moteur pas à pas selon un quatrième mode de réalisation.
La figure 22 est une vue en perspective qui représente schématiquement une hélice d'un ensemble propulsif de la figure 1 comportant un dispositif de verrouillage de l'hélice en rotation par rapport à la nacelle, le dispositif de verrouillage étant dans un état inactif.
La figure 23 est une vue similaire à celle de la figure 22 dans laquelle le dispositif de verrouillage est dans un état actif.
La figure 24 est un schéma électrique qui représente un capteur de position angulaire de l'hélice autour de son axe de rotation par rapport à la nacelle.
La figure 25 est un schéma-bloc qui représente les différentes étapes d'un procédé de repliement des pales d'un ensemble propulsif de l'aéronef de la figure 1.
La figure 26 est un schéma-bloc qui représente les différentes étapes d'un procédé de déploiement des pales d'un ensemble propulsif de l'aéronef de la figure 1.

### Description détaillée de l'invention

Dans la suite de la description, des éléments présentant une structure identique ou des fonctions analogues seront désignés par une même référence.

Dans la suite de la description, on adoptera à titre non limitatif une orientation longitudinale indiquée par la flèche "L" des figures qui est associée localement à chacun des ensembles propulsifs. La direction longitudinale est dirigée d'avant en arrière et elle est parallèle à l'axe de rotation de l'hélice d'un ensemble propulsif.

On utilisera une orientation radiale qui est dirigée orthogonalement à la direction longitudinale et qui est dirigée depuis l'intérieur à proximité de l'axe de rotation de l'hélice vers l'extérieur. On utilisera également une direction tangentielle qui est dirigée orthogonalement à une direction radiale et à la direction longitudinale.

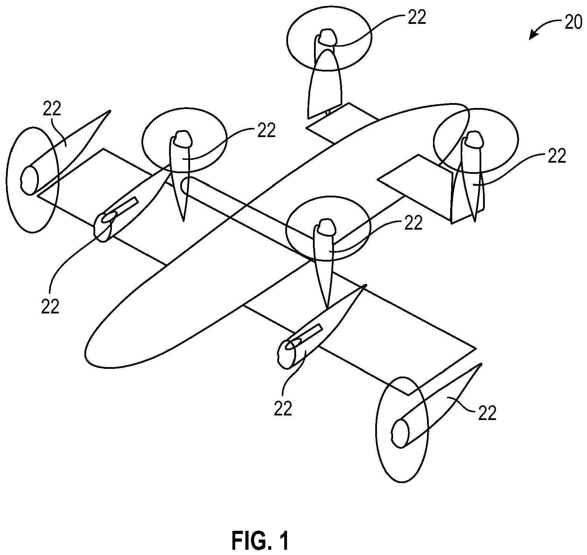

On a représenté à la figure 1 un aéronef 20 qui comporte plusieurs ensembles propulsifs 22 à hélice réalisés selon les enseignements de l'invention. Il s'agit ici d'un aéronef à décollage et atterrissage vertical, aussi dénommé par son acronyme anglais "VTOL" pour "Vertical Take Off and Landing". A cet égard, l'aéronef 20 comporte des ensembles propulsifs 22, dits "de sustentation", qui sont destinés à provoquer une poussée verticale de sustentation de l'aéronef 20. Ces ensembles propulsifs 22 de sustentation sont ici agencés sur un empennage de l'aéronef 20 ainsi que sur un fuselage de l'aéronef 20. L'aéronef 20 comporte aussi des ensembles propulsifs 22, dits de traction, qui sont destinés à provoquer une poussée longitudinale pour permettre le déplacement de l'aéronef 20 vers l'avant. Les ensembles propulsifs 22 de traction sont ici agencés sur une voilure de l'aéronef 20.

En variante, l'invention est applicable à un aéronef à classique, aussi appelé par son acronyme anglais "CTOL" pour "Classic Take Off and Landing". L'aéronef comporte alors uniquement des ensembles propulsifs de traction.

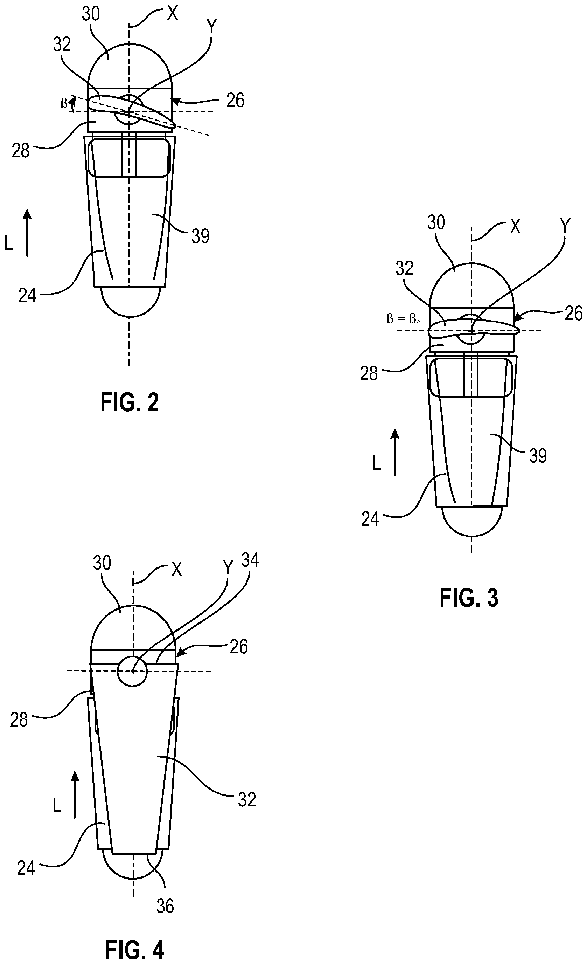

Les ensembles propulsifs 22 présentent une conception similaire. Ainsi, on décrira par la suite un unique ensemble propulsif 22, la description étant applicable aux autres ensembles propulsifs 22. Comme cela est représenté aux figures 2 à 4, l'ensemble propulsif 22 comporte une nacelle 24 qui est destinée à être montée sur un élément de structure de l'aéronef 20, par exemple une aile ou le fuselage. L'ensemble propulsif 22 est par exemple fixé sur l'élément de structure par l'intermédiaire d'un mât (non représenté). La nacelle 24 est munie d'un carénage aérodynamique.

La nacelle 24 peut être montée fixe sur l'élément de structure. Lorsque l'élément de structure est fixe, l'ensemble propulsif est fixe par rapport au fuselage de l'aéronef, il forme soit un ensemble propulsif de traction, soit un ensemble propulsif de sustentation. Lorsque l'élément de structure est monté pivotant par rapport au fuselage de l'aéronef, l'ensemble propulsif remplit alternativement une fonction de traction ou de sustentation selon la position de l'élément de structure.

Selon une autre variante de l'invention, la nacelle est montée pivotante autour d'un axe transversal sur l'élément de structure l'ensemble propulsif pouvant remplir alternativement une fonction de traction ou de sustentation selon la position angulaire de la nacelle sur l'élément de structure.

L'ensemble propulsif 22 comporte en outre une hélice 26 qui est montée rotative dans la nacelle 24 autour d'un axe "X" de rotation longitudinal par l'intermédiaire d'un moyeu 28 central. L'avant du moyeu 28 est généralement coiffé d'un nez 30 pour améliorer les performances aérodynamiques de l'ensemble propulsif 22, notamment en réduisant sa force de trainée.

L'hélice 26 comporte aussi une pluralité de pales 32 qui s'étendent selon un axe principal depuis un pied 34 par lequel la pale 32 est liée au moyeu 28 jusqu'à une extrémité 36 libre appelée bout de pale. Chaque pale 32 présente un profil courant d'un bord d'attaque jusqu'à un bord de fuite selon le sens de rotation de l'hélice 26. Chaque hélice 26 comporte ici deux pales 32. L'invention est bien entendu applicable à des hélices comportant un plus grand nombre de pales, par exemple trois, quatre ou plus de pales.

Les pales 32 sont réparties régulièrement autour du moyeu 28 avec un pas angulaire déterminé de sorte que l'hélice 26 présente une invariance de rotation dudit pas angulaire déterminé autour de l'axe "X" de rotation.

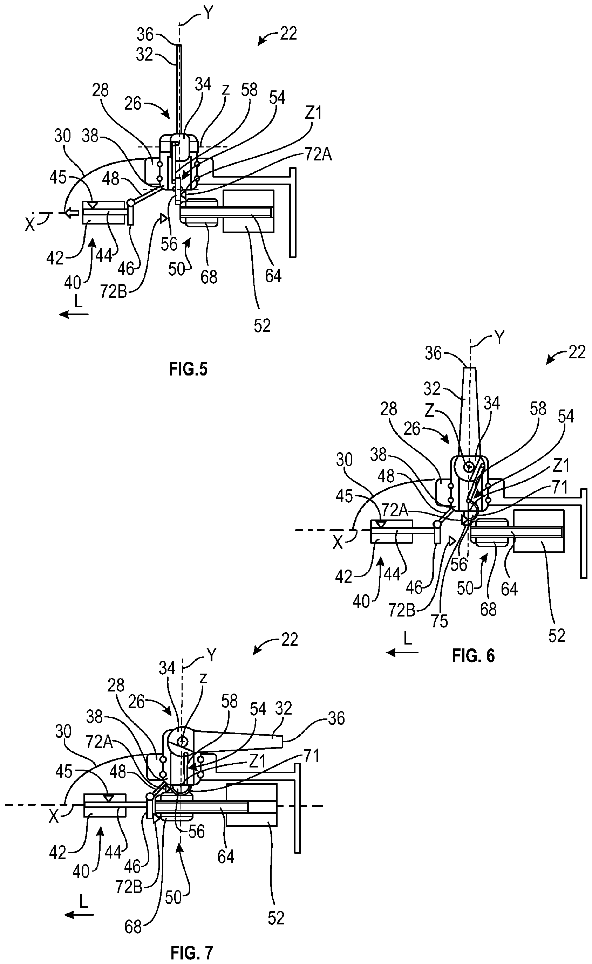

Chaque pale 32 est susceptible de pivoter par rapport au moyeu 28 autour d'un axe "Y" radial de calage qui est sensiblement confondu avec l'axe principal de la pale 32 lorsque l'hélice 26 est déployée, comme cela sera expliqué par la suite. A cet effet, le moyeu 28 comporte autant de fûts 38 de pale que l'hélice 26 comporte de pales 32 comme cela est représenté aux figures 5 à 9. Chaque fût 38 de pale est monté pivotant sur le moyeu 28 autour de l'axe "Y" de calage. Chaque fût 38 de pale est par exemple guidé en pivotement au moyen de paliers de roulement. Chaque fût 38 de pale se présente sous la forme d'un manchon qui reçoit le pied 34 d'une pale 32 associée de manière que la pale 32 soit solidaire en rotation avec le fût 38 de pale autour de l'axe "Y" de calage.

Les pales 32 sont ainsi susceptibles d'être commandées dans une position angulaire de calage "β" autour de l'axe "Y" de calage sur une plage qui s'étend entre une première position angulaire extrême de calage "β1" et une deuxième position angulaire extrême de calage "β2". La poussée produite par la rotation de l'hélice 26 est déterminée en fonction de la position angulaire de calage "β" qu'elle occupe. Ladite plage comporte une position angulaire de calage de repliement "β0" pour laquelle la pale 32 est mise en drapeau.

Ainsi, pour un ensemble propulsif 22 de sustentation, la position angulaire de calage de repliement "β0" correspond à une orientation pour laquelle les pales 32 s'étendent dans un plan orthogonal à l'axe "X" de rotation, aussi appelée position angulaire de calage de portance nulle, comme cela est illustré aux figures 3 et 4.

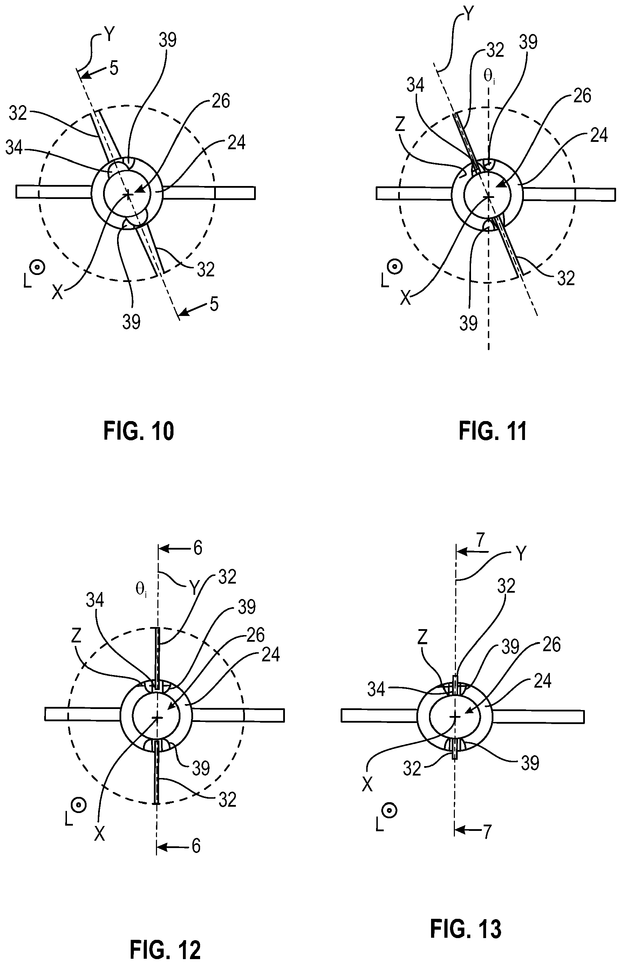

Au contraire, pour un ensemble propulsif 22 de traction, la position angulaire de calage de repliement "β0" correspond à une orientation pour laquelle les pales 32 s'étendent dans un plan parallèle à l'axe "X" de rotation, les pales 32 étant "en drapeau", comme cela est illustré aux figures 11 à 13, ainsi qu'aux figures 6 à 9.

Par ailleurs, l'hélice 26 de chacun des ensembles propulsifs 22 présente ici la particularité de présenter des pales 32 repliables. Ceci permet notamment d'améliorer les performances aérodynamiques de l'aéronef 20 dans certaines conditions de vol, par exemple en repliant les pales 32 des ensembles propulsifs 22 de sustentation lorsque l'aéronef 20 vole à une vitesse suffisante pour que sa voilure assure seule la force de portance.

A cet effet, chaque pale 32 est montée pivotante par rapport au fût 38 de pale associé autour d'un axe "Z" de repliement qui s'étend orthogonalement à l'axe "Y" radial de calage de ladite pale 32, comme cela est représenté aux figures 5 à 9. Ainsi, l'axe "Z" de repliement tourne en même temps que le fût 38 de pale autour de l'axe "Y" de calage. La pale 32 est plus particulièrement articulée avec le fût 38 de pale de manière que l'axe "Z" de repliement soit orthogonal à l'axe "X" de rotation lorsque la pale 32 occupe sa position angulaire de calage de repliement "β0".

Les pales 32 de l'hélice 26 sont ainsi susceptibles d'être commandées entre une position déployée dans laquelle l'axe principal des pales 32 s'étend globalement radialement par rapport à l'axe "X" de rotation, comme illustré aux figures 2, 3, 5, 6, 8 et 10 à 12, et une position repliée dans laquelle l'axe principal des pales 32 s'étend globalement longitudinalement, parallèlement à l'axe "X" de rotation, comme représenté aux figures 4, 7, 9 et 13. En position repliée, les pales 32 sont reçues longitudinalement contre la nacelle 24.

Avantageusement, pour réduire la force de trainée de l'ensemble propulsif 22 lorsque les pales 32 sont en position repliée, la nacelle 24 comporte des logements 39 qui sont destinés à loger chacun une pale 32 de l'hélice 26 dans sa position angulaire de calage de repliement "β0", comme représenté aux figures 2 à 4 et 10 à 13. Les pales 32 en position repliée sont ainsi intégrées au carénage de la nacelle 24. A cet effet, la nacelle 24 comporte autant de logements 39 que l'hélice 26 comporte de pales 32.

Pour commander la position angulaire de calage "β" des pales 32, l'ensemble propulsif 22 comporte un dispositif 40 de calage, visible aux figures 5 à 9, qui commande le pivotement des fûts 38 de pale autour de l'axe "Y" radial de calage par rapport au moyeu 28 pour déterminer la position angulaire de calage "β" de chaque pale 32. Le dispositif 40 de calage permet ici de commander simultanément toutes les pales 32 de l'hélice 26 dans une même position angulaire de calage "β".

Le dispositif 40 de calage comporte notamment un actionneur 42 de calage qui comporte une tige 44 de commande coulissante selon son axe principal coaxial à l'axe "X" de rotation. Il s'agit ici d'un actionneur 42 électrique linéaire. En variante, l'actionneur de calage peut aussi être un actionneur hydraulique ou électrohydraulique. Un plateau 46 radial est fixé à l'extrémité libre de la tige 44 de commande. Chaque pale 32 de l'hélice 26 est reliée au plateau 46 par l'intermédiaire d'une biellette 48 de commande qui présente une première extrémité montée articulée sur le plateau 46 et une deuxième extrémité montée articulée sur le fût 38 de pale de manière excentrée par rapport à l'axe "Y" de calage de manière à réaliser une liaison bielle/manivelle entre le plateau 46 et la pale 32. Ainsi, la position angulaire de calage "β" des pales 32 varie en fonction de la position axiale de la tige 44 de commande.

L'actionneur 42 de calage est ici monté tournant de manière solidaire avec l'hélice 26. L'actionneur 42 de calage est par exemple agencé à l'intérieur du nez 30.

En variante, non représentée de l'invention, l'actionneur de calage est monté fixe par rapport à la nacelle, seul le plateau 46 de commande étant monté rotatif solidairement avec l'hélice 26.

Avantageusement, l'ensemble propulsif 22 comporte des moyens de détermination de la position angulaire de calage "β". Il s'agit par exemple d'un capteur 45 de calage qui permet de détecter la position longitudinale de la tige 44. Le capteur 45 de calage est par exemple un capteur inductif.

Pour commander les pales 32 entre leur position déployée et leur position repliée, l'ensemble propulsif 22 comporte un dispositif 50 de repliement qui comporte un actionneur 52 de repliement commandant le pivotement de chaque pale 32 par rapport à son fût 38 de pale entre sa position déployée et sa position repliée, comme cela apparaît aux figures 5 à 9. L'actionneur 52 de repliement est ici commun à toutes les pales 32 de sorte que les pales 32 sont commandées simultanément entre leur position déployée et leur position repliée. L'actionneur 52 de repliement est ici formé par un actionneur électrique.

Le dispositif 50 de repliement comportant une transmission 54 associée à chaque pale 32 qui a pour fonction de transmettre le mouvement de l'actionneur 52 de repliement aux pales 32. Chaque transmission 54 comportant un organe 56 mobile de commande qui est monté solidaire en rotation avec le fût 38 de pale associé et qui est mu par l'actionneur 52 de repliement. Chaque transmission 54 comporte en outre une biellette 58 qui comporte une première extrémité montée pivotante sur le pied 34 de la pale 32 associée de manière excentrée par rapport à l'axe "Z" de repliement et une deuxième extrémité montée pivotante sur l'organe 56 mobile de commande. La biellette 58 forme avec le pied 34 de pale une liaison bielle/manivelle qui permet de transformer le mouvement de l'organe 56 de commande en mouvement de pivotement de la pale 32 autour de son axe "Z" de repliement. A cet effet, les deux extrémités de la biellette 58 sont montées pivotantes autour de deux axes parallèles à l'axe "Z" de repliement.

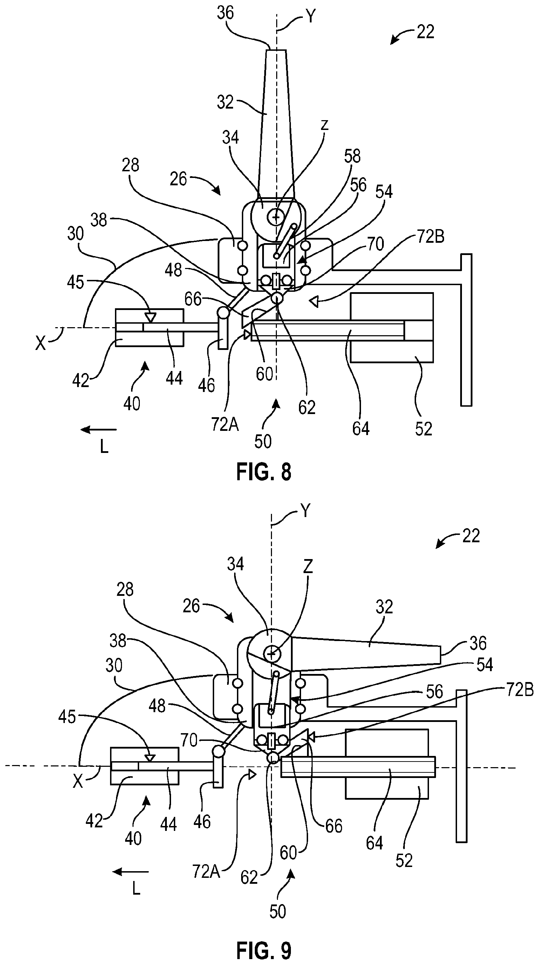

Selon un exemple, qui ne fait pas partie de l'invention, du dispositif 50 de repliement représenté aux figures 8 et 9, l'organe 56 de commande de chaque transmission 54 est formé par un coulisseau qui est monté coulissant radialement le long de l'axe "Y" de calage dans le fût 38 de pale associé entre une position extrême interne correspondant à l'une des positions de la pale 32 associée et une position extrême externe correspondant à l'autre des positions de la pale 32 associée.

La position extrême externe de l'organe 56 de commande, représentée à la figure 8, correspond ici à la position déployée de la pale 32 associée, tandis que sa position extrême interne, représentée à la figure 9, correspond à la position repliée de la pale 32 associée.

Le coulissement de l'organe 56 mobile de commande est ici actionné au moyen d'une came 60 qui coopère avec l'organe 56 mobile de commande par l'intermédiaire d'un suiveur 62 de came. Le suiveur 62 de came est monté solidaire en coulissement le long de l'axe "Y" de calage avec l'organe 56 de commande.

Plus particulièrement, la came 60 est montée coulissante longitudinalement le long de l'axe "X" de rotation entre une première position longitudinale avant, qui correspond ici à la position déployée de la pale 32 représentée à la figure 8, et une deuxième position longitudinale arrière, qui correspond ici à la position repliée de la pale 32 représentée à la figure 9. Pour ce faire, la came 60 présente un profil en pente qui s'étend depuis une extrémité avant, agencée radialement à proximité de l'axe "X" de rotation, jusqu'à une extrémité arrière, agencée à une plus grande distance radiale de l'axe "X" de rotation.

La came 60 est montée solidaire en coulissement avec une tige 64 coulissante de l'actionneur 52 de repliement. Les pales 32 étant toutes commandées simultanément par le même actionneur 52 de repliement, toutes les cames 60 de chacune des transmissions 54 sont ici fixées sur la même tige 64 coulissante. La tige 64 coulissante est coaxiale avec l'axe "X" de rotation.

L'actionneur 52 de repliement est ici monté solidaire en rotation avec l'hélice 26 autour de l'axe "X" de rotation.

En variante, l'actionneur de repliement est monté fixe par rapport à la nacelle. En ce cas, la came peut être formée par un tronc de cône qui permet de coopérer avec le suiveur de came quelle que soit la position angulaire de l'hélice autour de l'axe de rotation, ou encore, la came est montée rotative autour de l'axe de rotation par rapport à la nacelle pour accompagner l'hélice dans sa rotation et demeurer en coïncidence avec le suiveur de came de la pale associée.

Par ailleurs, le suiveur 62 de came est ici formé par un galet rotatif autour d'un axe orthogonal à l'axe "X" de rotation et orthogonal à l'axe "Y" de calage. Il s'agit par exemple d'un galet en forme de diabolo qui présente deux surfaces de roulement parallèle sur la came 60. Avantageusement, le suiveur 62 de came est guidé latéralement par rapport à la came 60 lors de son coulissement au moyen de rails 66 longitudinaux qui sont portés par la came 60. Pour que le suiveur 62 de came demeure engagé dans les rails 66 quel que soit la position angulaire de calage "β" de la pale 32 associée, il est monté tournant autour de l'axe "Y" de calage sur l'organe 56 mobile de commande. Le suiveur 62 de came est ainsi porté par une chape 70 qui est montée pivotante, par exemple par l'intermédiaire d'une butée à roulement, sur une extrémité interne de l'organe 56 mobile de commande. Ainsi, l'axe de rotation du suiveur 62 de came demeure orthogonal à l'axe "X" de rotation quelle que soit la position angulaire de calage "β" de la pale 32 associée, tandis que l'organe 56 mobile de commande est libre de pivoter solidairement avec le fût 28 de pale autour de l'axe "Y" de calage.

Selon un premier mode de réalisation du dispositif 50 de repliement représenté aux figures 5 à 7, l'organe 56 mobile de commande est formé par une manivelle qui est montée pivotante dans le fût 38 de pale autour d'un axe "Z1" de commande parallèle à l'axe "Z" de repliement entre une première position angulaire extrême correspondant à l'une des positions de la pale 32 associée et une deuxième position angulaire extrême correspondant à l'autre des positions de la pale 32 associée. La deuxième extrémité de la biellette 58 est montée pivotante sur l'organe 56 de commande de manière excentrée par rapport à son axe "Z1" de commande.

Le pivotement de l'organe 56 mobile de commande est ici actionné au moyen d'une crémaillère 68 qui engrène avec un secteur 71 denté de l'organe 56 mobile de commande. Plus particulièrement, la crémaillère 68 est montée coulissante longitudinalement le long de l'axe "X" de rotation entre une première position longitudinale arrière, qui correspond ici à la position déployée de la pale 32, comme représenté aux figures 5 et 6, et une deuxième position longitudinale avant, qui correspond ici à la position repliée de la pale 32, comme représenté à la figure 7. La crémaillère 68 s'étend parallèlement à l'axe "X" de rotation.

La crémaillère 68 est montée solidaire en coulissement avec la tige 64 coulissante de l'actionneur 52 de repliement. Les pales 32 étant toutes commandées simultanément par le même actionneur 52 de repliement, toutes les crémaillères 68 de chacune des transmissions 54 sont ici fixées sur la même tige 64 coulissante. La tige 64 coulissante est coaxiale avec l'axe "X" de rotation. L'actionneur 52 de repliement est ici monté solidaire en rotation avec l'hélice 26 autour de l'axe "X" de rotation.

Quel que soit le mode de réalisation du dispositif 50 de repliement, il est avantageux de pouvoir vérifier que les pales 32 de l'hélice 26 sont dans leur position déployée ou dans leur position repliée. Ainsi, le dispositif 50 de repliement est ici équipé d'un dispositif de détection de la position de la pale 32. Le dispositif de détection est par exemple formé par un premier capteur 72A de déploiement et par un deuxième capteur 72B de repliement. Le premier capteur 72A de déploiement est agencé de manière à détecter qu'un élément mobile agencé sur la chaîne de transmission entre l'actionneur 52 de repliement et la pale 32 occupe une position spécifique correspondant à la position déployée de la pale 32, tandis que le deuxième capteur 72B de repliement est agencé de manière à détecter qu'un élément mobile agencé sur la chaîne de transmission entre l'actionneur 52 de repliement et la pale 32 occupe une position spécifique correspondant à la position repliée de la pale 32. Les capteurs 72A, 72B fonctionnent ici en tout ou rien, les capteurs 72A, 72B étant activés uniquement lorsque la pale 32 occupe la position déployée ou repliée associée. Il s'agit par exemple de capteurs 72A, 72B de contact ou encore de capteurs 72A, 72B inductifs.

Dans les exemples représentés aux figures 8 et 9 correspondant au premier mode de réalisation du dispositif 50 de repliement, le capteur 72A de déploiement est activé par l'extrémité libre de la tige 64 de commande, tandis que le capteur 72B de repliement est activé par une extrémité arrière de la came 60.

Dans les exemples représentés aux figures 5 à 7 du dispositif 50 de repliement, le capteur 72A de déploiement est activé par l'organe 56 de commande dans sa position angulaire correspondant à la position déployée de la pale 32, tandis que le capteur 72B de repliement est activé par une extrémité avant de la tige 64 de commande.

En complément, on pourra prévoir un dispositif de verrouillage mécanique de la pale 32 dans sa position déployée et dans sa position repliée. Le dispositif de verrouillage est par exemple formé par un loquet 75 qui coopère avec un élément mobile agencé sur la chaîne de transmission entre l'actionneur 52 de repliement et la pale 32. Le loquet 75 est ici agencé de manière à bloquer le pivotement de l'organe 56 mobile de commande lorsque la pale 32 occupe sa position déployée et sa position repliée. Le loquet 75 est ici actionné par le coulissement de la crémaillère 68..

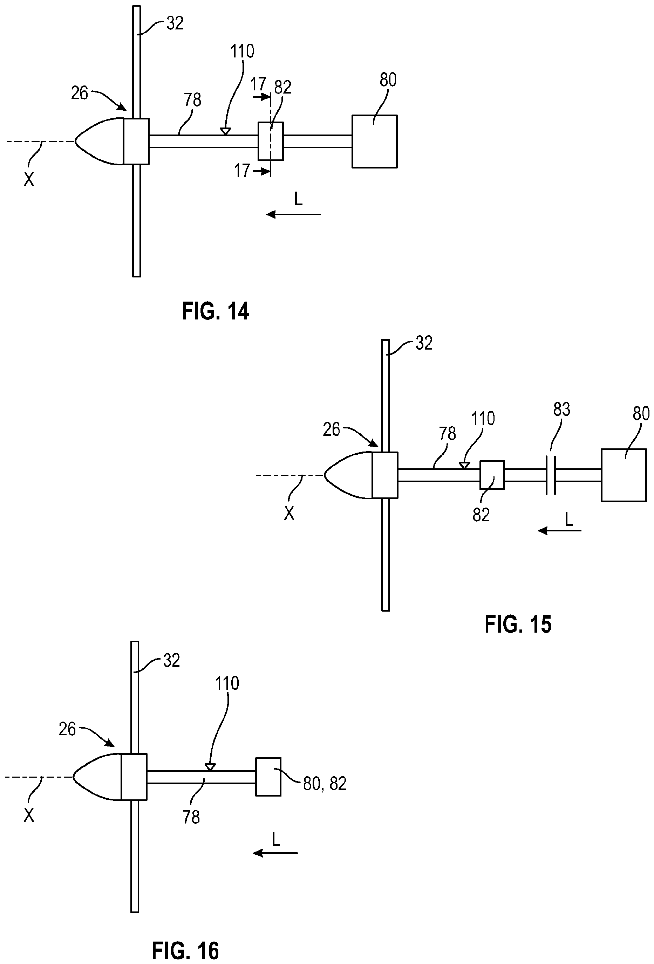

Selon un autre aspect de l'ensemble propulsif 22, celui-ci comporte un arbre 78 de rotor qui est monté rotatif dans la nacelle 24 coaxialement avec l'axe "X" de rotation et qui est solidaire en rotation avec l'hélice 26, comme cela est représenté aux figures 14 à 16. L'ensemble propulsif 22 comporte en outre des moyens de propulsion qui entraîne l'hélice 26 en rotation par l'intermédiaire de l'arbre 78 de rotor.

L'ensemble propulsif 22 comporte en outre des moyens d'indexation pour arrêter l'hélice 26 dans au moins une position angulaire indexée "θi" autour de l'axe "X" de rotation dans laquelle les pales 32 en position déployée sont en coïncidence avec les logements 34 de la nacelle 24. Du fait de l'invariance de rotation de l'hélice 26, cette dernière est susceptible de présenter autant de positions angulaires indexées "θi" que de pales 32.

Les moyens d'indexation sont formés par un moteur 82 électrique pas à pas, aussi connu sous sa dénomination anglaise de "stepper motor". De manière connue un tel moteur 82 pas à pas comporte un rotor 84 qui est monté rotatif dans un stator 86. Le rotor 84 est accouplé avec le moyeu 28 de l'hélice 26 tandis que le stator 86 est fixe par rapport à la nacelle 24. Le rotor 84 est ici monté solidaire en rotation avec l'arbre 78 de rotor autour de l'axe "X" de rotation.

Un tel moteur 82 pas à pas présente l'avantage de pouvoir ralentir l'hélice 26 en opposant à sa rotation un couple résistant. En outre, il permet aussi de fournir à l'hélice 26 un couple moteur permettant de l'amener avec une grande précision jusqu'à l'une de ses positions angulaires indexées "θi". Enfin, le stator 86 du moteur 82 pas à pas est agencé de manière à faire correspondre chacune des positions angulaires indexées "θi" de l'hélice 26 avec un pas du moteur 82 pas à pas permettant de bloquer l'hélice 26 en rotation dans chacune de ses positions angulaires indexées "θi".

Dans l'exemple représenté à la figure 14, les moyens de propulsion comportent un moteur 80 de propulsion électrique qui est distinct du moteur 82 pas à pas. Dans ce cas, le moteur 82 pas à pas est interposé entre le moteur 80 de propulsion et le moyeu 28 de l'hélice sur la chaîne de transmission du couple moteur produit par le moteur 80 de propulsion. Le moteur 82 pas à pas est ici agencé directement sur l'arbre 78 de rotor qui est accouplé en permanence à un arbre moteur du moteur 80 de propulsion.

Dans l'exemple représenté à la figure 15, le moteur 80 de propulsion est un moteur à combustion. Dans ce cas, le moteur 82 pas à pas est interposé entre le moteur 80 de propulsion et le moyeu 28 de l'hélice sur la chaîne de transmission du couple moteur produit par le moteur 80 de propulsion. Le moteur 82 pas à pas est ici agencé directement sur l'arbre 78 de rotor qui est accouplé de manière commandée un arbre moteur du moteur 80 de propulsion par l'intermédiaire d'un embrayage 83.

Dans l'exemple représenté à la figure 16, le moteur 82 électrique pas à pas forme les moyens de propulsion.

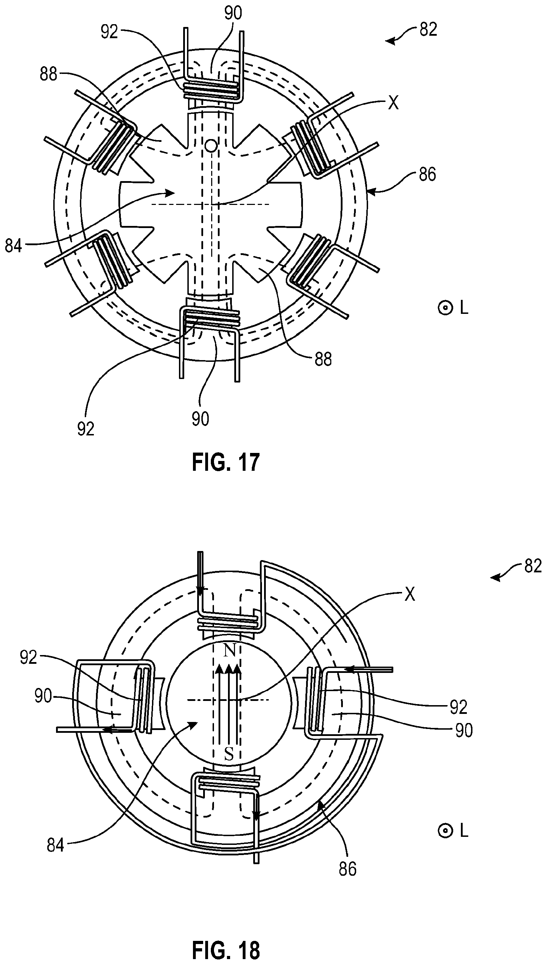

Selon un premier mode de réalisation des moyens d'indexation qui est représenté à la figure 17, le moteur 82 électrique pas à pas est un moteur à réluctance variable, aussi connu sous sa dénomination anglaise de "variable réluctance stepper" ou encore "Switched Reluctance Motor" (SRM). Dans un tel moteur 82 pas à pas, le rotor 84 est constitué d'un matériau ferromagnétique. Le rotor 84 est par exemple formé par un empilement de tôles en fer doux ou encore le rotor 84 est réalisé en une pièce monolithique d'acier magnétique. Le rotor 84 comporte une denture externe avec un nombre pair de dents 88.

Le stator 86 est généralement réalisé par un empilement de tôles ferromagnétiques. Le stator 86 comporte une denture interne comportant un nombre pair de dents 90. Il comporte plusieurs bobines 92 électriques. Les bobines 92 agencées autour de deux dents 90 opposées sont alimentées en série pour former deux électroaimants dont des pôles de signe opposés sont dirigés radialement vers le rotor 84.

Le nombre de dents du rotor 84 et le nombre de bobines du stator 86 sont différents et ils permettent de déterminer le nombre de pas du moteur 82 pas à pas, c'est-à-dire le nombre de positions angulaires dans lesquelles le rotor 84 peut être arrêté de manière stable par alimentation de deux bobines 92 électriques opposées du rotor 86.

En alimentant tour à tour les paires opposées de bobines 92 électriques, il est ainsi possible de faire tourner le rotor 84 en attirant les dents 88 de rotor les plus proches dans l'alignement desdites bobines 92 électriques.

Selon un deuxième mode de réalisation des moyens d'indexation, le moteur 82 électrique pas à pas est un moteur à aimants permanents, aussi connu sous sa dénomination anglaise de "permanent magnet stepper".

Le stator 86 est ici sensiblement identique à celui d'un moteur pas à pas à réluctance variable tel que décrit dans le premier mode de réalisation. En revanche, au lieu de comporter des dents, le rotor 84 comporte ici au moins un aimant permanent comportant un pôle nord "N" et un pôle sud "S" dont l'axe polaire est orienté radialement. Les pôles "N", "S" des aimants permanents sont ici agencés symétriquement par rapport à l'axe "X" de rotation de manière que les pôles nord "N" et les pôles sud "S" soit agencés en alternance autour de l'axe "X" de rotation.

Un tel moteur 82 pas à pas présente généralement un couple supérieur à celui d'un moteur à réluctance variable.

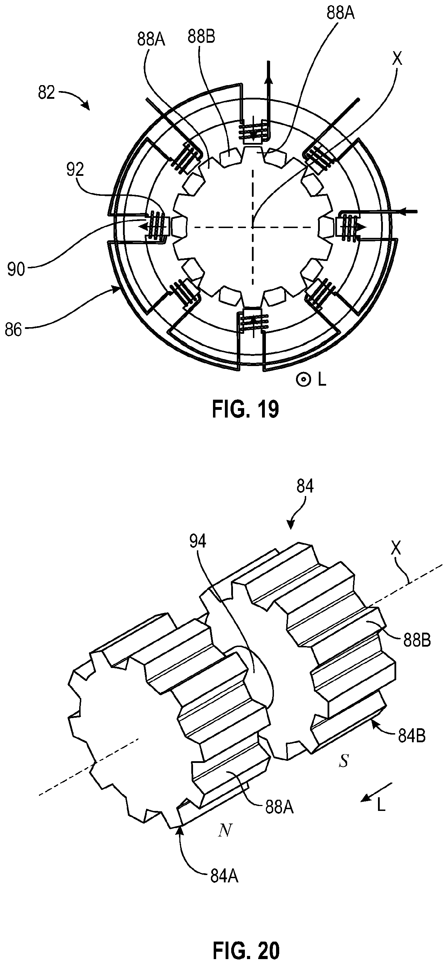

Selon un troisième mode de réalisation des moyens d'indexation représenté aux figures 19 et 20, le moteur 82 électrique pas à pas est un moteur hybride, aussi connu sous sa dénomination anglaise de "hybrid synchronous stepper".

Le stator 86 est ici sensiblement identique à celui d'un moteur pas à pas à réluctance variable tel que décrit dans le premier mode de réalisation.

En revanche, le rotor 84 est ici formé de deux roues 84A, 84B dentées en matériau ferromagnétique présentant une denture externe munie d'un même nombre pair de dents 88A, 88B. Les deux roues 84A, 84B dentées sont montées coaxialement avec intercalage axial d'un aimant 94 permanent dont un pôle nord est au contact d'une roue 84A dentée, tandis que le pôle sud est au contact de l'autre roue 84B dentée.

Du fait de cette configuration, les dents 88A de la première roue 84A dentée forment des pôles nord, tandis que les dents 88B de la deuxième roue 88B dentée forment des pôles sud. Les dents 88A de la première roue 84A dentée sont décalées angulairement par rapport aux dents 88B de la deuxième roue 84B dentée. De ce fait, en vue axiale, les dents 88A formant des pôles nord sont interposées angulairement entre deux dents 88B formant des pôles sud.

Le rotor 84 ainsi formé est reçu à rotation à l'intérieur du stator 86. Ainsi, l'alimentation de certaines bobines 92 du stator 86 va attirer les dents 88A, 88B les plus proches du rotor 84 de signe opposé.

Un tel moteur 82 pas à pas hybride présente l'avantage de présenter un grand nombre de pas, comme le moteur 82 à réluctance variable décrit dans le premier mode de réalisation, tout en présentant un couple moteur élevé, comme le moteur 82 à aimant permanent décrit dans le deuxième mode de réalisation.

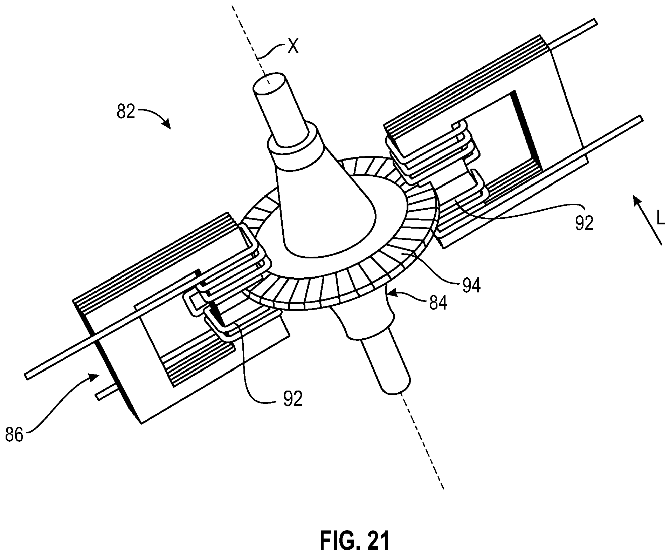

En variante de ce troisième mode de réalisation, comme illustré à la figure 21, il s'agit d'un moteur 82 pas à pas à flux axial dans lequel le rotor 84 est formé d'un disque équipé à sa périphérie d'aimants 94 présentant des pôles de signes alternés. Le stator 86 comporte également des électroaimants formés par des bobines 92 électriques enroulées autour de noyaux en matériau ferromagnétique de manière à produire un champ magnétique dirigé parallèlement à l'axe "X" de rotation du rotor 84 en direction de la périphérie du rotor 84.

Quel que soit le type de moteur 82 pas à pas mis en oeuvre, l'ensemble propulsif 22 comporte avantageusement un dispositif 96 de verrouillage mécanique de l'hélice 26 autour de son axe "X" de rotation par rapport à la nacelle 24 dans chacune de ses positions angulaires indexées "θi". En outre, le dispositif 96 de verrouillage est conçu pour que l'hélice 26 ne puisse être verrouillée que dans lesdites positions angulaires indexées "θi".

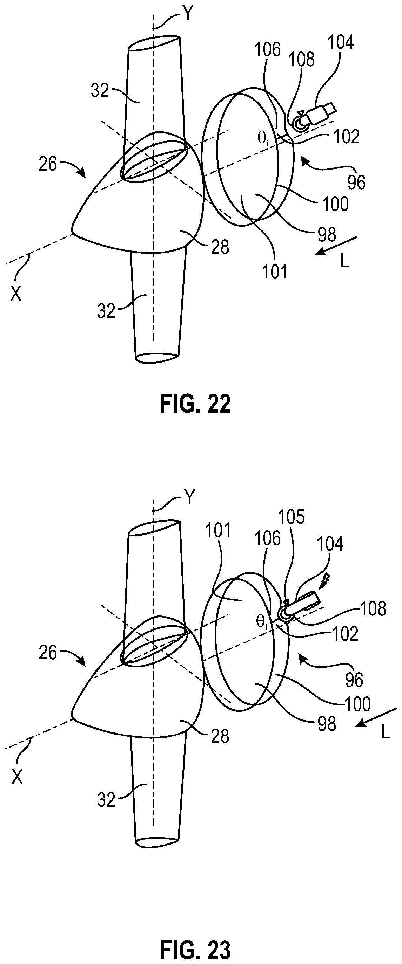

Comme cela est représenté aux figures 22 et 23, le dispositif 96 de verrouillage comporte ici un disque 98 qui est monté solidaire en rotation avec l'hélice 26. Le disque 98 est ici monté coaxial avec l'axe "X" de rotation. Le disque 98 est délimité radialement par un bord 100 périphérique annulaire et il est délimité axialement par deux faces 101 circulaires. Le disque 98 comporte au moins un cran 102 qui est correspond à l'une des positions angulaires indexées "θi". Le disque 98 comporte ici un unique cran 102.

En variante, le disque 98 peut comporter plusieurs crans 102 correspondant chacun avec une position angulaire indexée "θi". Le disque 98 peut ainsi comporter un nombre de crans 102 qui est égal au nombre de positions angulaires indexées "θi". Ceci permet notamment d'atteindre plus rapidement une position angulaire indexée "θi" sans avoir à refaire un tour complet d'hélice.

Les crans 102 sont susceptibles de coopérer avec un organe 104 de verrouillage qui est monté mobile par rapport à la nacelle 24 entre une position inactive dans laquelle le disque 98 est libre de tourner et une position active dans laquelle l'organe 98 de verrouillage est susceptible d'être reçu dans un cran 102 lorsque l'hélice 26 occupe une de ses positions angulaires indexées "θi" pour immobiliser l'hélice 26 en rotation par rapport à la nacelle 24 autour de l'axe "X" de rotation. L'organe 104 de verrouillage est par exemple mu par un actionneur électrique.

Dans le mode de réalisation représenté aux figures 22 et 23, les crans 102 sont réalisés dans le bord 100 périphérique du disque 98. L'organe 104 de verrouillage est ici monté coulissant radialement par rapport à la nacelle 24 entre sa position inactive dans laquelle il est écarté du bord 100 périphérique, comme représenté à la figure 22, et sa position active dans laquelle il est déplacé radialement vers l'axe "X" de rotation pour pénétrer dans un cran 102 en coïncidence, comme représenté à la figure 23. Lorsque l'hélice 26 n'occupe pas l'une de ses positions angulaires indexées "θi", l'organe 104 de verrouillage ne peut être commandé dans sa position active, car il buterait contre le bord 100 périphérique du disque 98.

En variante non représentée de l'invention, les crans sont réalisés sur une piste annulaire d'une des faces circulaire du disque. Dans ce cas, l'organe de verrouillage peut être monté coulissant selon une direction longitudinale par rapport à la nacelle.

Un capteur 105 de verrouillage, par exemple un capteur de contact ou un capteur inductif, permet de détecter lorsque l'organe 104 de verrouillage occupe sa position active.

Avantageusement, chaque cran 102 présente une forme de chemin de came muni de deux rampes qui convergent vers un fond 106. Le fond 106 est agencé de manière que, lorsque l'organe 104 de verrouillage est reçu dans le fond du cran 102, l'hélice 26 occupe alors exactement une de ses positions angulaires indexées "θi". L'organe 104 de verrouillage comporte à son extrémité libre un galet 108, ou un revêtement glissant, qui est susceptible de rouler, respectivement de glisser, contre les rampes du cran 102. Ainsi, lorsque l'hélice 26 est arrêtée dans une position angulaire qui est agencée dans un intervalle de tolérance [θi-λ ; θi+λ] déterminé de part et d'autre d'une de ses positions angulaires indexées "θi", le galet 108 vient en contact avec l'une des rampes du cran 102 lorsque l'organe 104 de verrouillage est commandé vers sa position active. L'organe 104 de verrouillage fournit un effort suffisant pour faire tourner l'hélice 26 par coopération avec la rampe du cran 102 lors de son déplacement vers sa position active jusqu'à ce que le galet 108 soit en fond 106 du cran 102 afin de positionner exactement l'hélice 26 dans sa position angulaire indexée "θi".

Pour réaliser une telle opération, il est préférable que l'hélice 26 ne soit soumise à aucun couple moteur ou résistant autre que ceux dus aux frottements des organes de guidage en rotation de l'hélice 26.

Par ailleurs, pour garantir que l'hélice 26 occupe globalement sa position angulaire indexée "θi", ou tout au moins qu'elle occupe une position angulaire située dans l'intervalle de tolérance [θi-λ ; θi+λ] déterminé de part et d'autre d'une de ses positions angulaires indexées "θi", l'ensemble propulsif 22 comporte un capteur 110 de position angulaire de l'hélice 26 par rapport à la nacelle 24, comme représenté aux figures 14 à 16.

Il s'agit par exemple d'un capteur 110 inductif permettant de mesurer la position angulaire de l'hélice sans contact. Un premier élément 111 de rotor est ainsi monté solidaire en rotation avec l'hélice 26, tandis qu'un deuxième élément de stator 113 permet de détecter la position angulaire de l'élément de rotor par des moyens électromagnétiques.

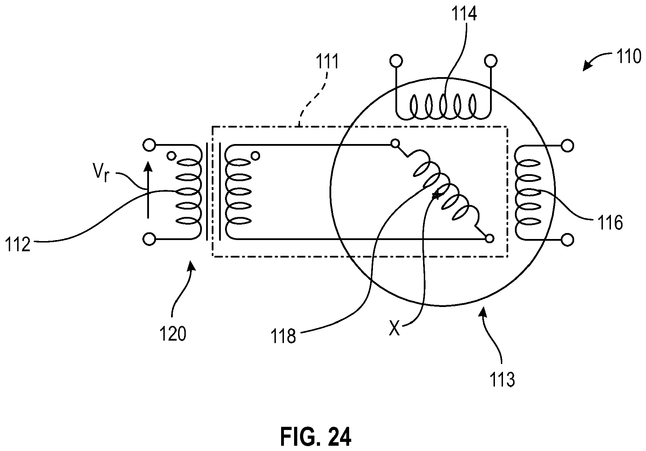

Comme représenté à la figure 24, le capteur 110 inductif est ici un résolveur, aussi connu sous son acronyme anglais "RVDT" signifiant "Rotary Variable Differential Transformer". En guise d'exemple non limitatif connu, un tel capteur 110 comporte un bobinage 112 primaire et deux bobinages 114, 116 secondaires qui sont portés par l'élément 113 de stator. Le bobinage 112 primaire est alimenté par une tension alternative "Vr". Les deux bobinages 114, 116 secondaires sont décalés de 90° autour de l'axe "X" de rotation. L'élément 111 de rotor comporte un bobinage 118 de référence. Le bobinage 118 de référence et le bobinage 112 primaire forment un transformateur 120 rotatif. Les bobinages 114, 116 secondaires sont excités par la rotation du bobinage 118 de référence porté par l'élément 111 de rotor. La valeur de la tension dans chacun des bobinages 114, 116 secondaires permet de déterminer de manière unique la position angulaire de l'élément de rotor 111 autour de l'axe "X" de rotation.

En variante, le capteur 110 inductif est formé par un produit connu sous le nom commercial "Inductosyn" qui permet d'atteindre une grande précision angulaire.

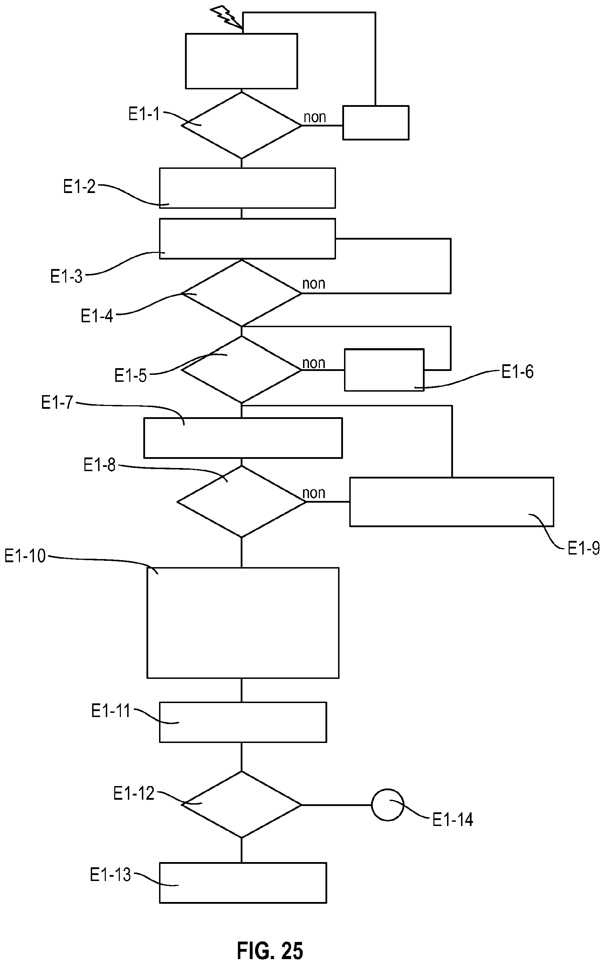

On décrit à présent un procédé de repliement des pales 32 de l'hélice 26 de l'ensemble propulsif 22 en référence à la figure 25. Un tel procédé est mis en oeuvre par une unité électronique de commande non représentée. Le procédé peut être déclenché soit automatiquement, soit sur ordre manuel du pilote. En début de procédé, les pales 32 de l'hélice 26 sont déployées comme représenté aux figures 2, 3, 5, 6 et 8. Les pales 32 occupent une position angulaire de calage "β" qui peut être différente de sa position angulaire de calage de repliement "β0", comme cela est représenté aux figures 2 et 5. En outre, l'hélice 26 est généralement entraînée en rotation par les moyens de propulsion.

Lors d'une première étape "E1-1", on vérifie certaines conditions de vol de l'aéronef pour pouvoir obtenir l'autorisation de poursuivre le procédé de repliement des pales 32.

Par exemple, lorsque l'étape "E1-1" est appliquée à un ensemble propulsif 22 de sustentation, on vérifie que l'aéronef 20 a atteint une vitesse suffisante pour que sa voilure assure la force de portance sans nécessité de poussée de sustentation de la part des ensembles propulsifs 22 de sustentation. On vérifie par exemple que la vitesse "V" d'avancement de l'aéronef 20 est bien supérieure à une première vitesse "V0" de seuil déterminée. Si c'est bien le cas, une étape "E1-2" d'arrêt de la propulsion suivante est déclenchée, sinon le procédé de repliement est interrompu.

Selon un autre exemple, lorsque l'étape "E1-1" est appliquée à un ensemble propulsif 22 de traction, on vérifie que l'aéronef 20 a atteint une vitesse suffisante pour un vol en croisière économique ne nécessitant pas que la totalité des ensembles propulsifs 22 de traction soient utilisés simultanément pour procurer une force de poussée à l'aéronef 20. On vérifie par exemple que la vitesse "V" d'avancement de l'aéronef 20 est bien supérieure à une deuxième vitesse "V1" de seuil déterminée. Les pales 32 des ensembles propulsifs 22 de traction peuvent aussi être repliées lorsque l'aéronef 20 est en vol stationnaire car elles ne sont alors plus nécessaires. On vérifie alors que la vitesse d'avancement de l'aéronef 20 est nulle. Si l'une de ces conditions est vérifiée, l'étape "E1-2" suivante est déclenchée, sinon le procédé de repliement est interrompu.

Lors de l'étape "E1-2" d'arrêt de la propulsion, le couple moteur fourni par les moyens de propulsion est interrompu de sorte que l'hélice 26 tourne en rotation libre uniquement sous l'effet de son inertie.

Lorsque l'hélice 26 est entraînée par un moteur 80 de propulsion à combustion, l'embrayage 83 est commandé dans une position débrayée, soit dès le début de l'étape "E1-2" d'arrêt de la propulsion, soit après un laps de temps déterminé pour que les frottements du moteur aient pu commencer à ralentir l'hélice 26.

Lorsque l'hélice 26 est entraînée par un moteur 80 de propulsion électrique, le moteur 80 de propulsion demeure accouplé à l'hélice 26 car les frottements dans un tel moteur sont généralement faibles.

A l'issue de l'étape "E1-2" d'arrêt de la propulsion, une étape "E1-3" de calage est déclenchée. Lors de cette étape "E1-3" de calage, les pales 32 de l'hélice 26 sont commandées dans leur position angulaire de calage de repliement "β0", c'est-à-dire dans une position en drapeau pour un ensemble propulsif 22 de traction, comme représenté aux figures 6, 8 et 11, ou en position de portance nulle pour un ensemble propulsif 22 de sustentation, comme représenté à la figure 3.

L'étape "E1-3" de calage est suivie d'une étape "E1-4" de vérification de la position angulaire de calage durant laquelle on vérifie, au moyen du capteur 45 de calage, que les pales 32 occupent leur position angulaire de calage de repliement "β0". Il est généralement toléré un léger décalage "ε" de quelques degrés par rapport à la position angulaire de calage de repliement "β0" dans un sens ou dans l'autre. Ainsi, on vérifie plus précisément que la position angulaire de calage "β" des pales 32 est comprise dans une plage de position angulaire de calage délimitée par un seuil inférieur de "β0-ε" et par une limite supérieure de "β0+ε". Si c'est le cas, un procédé d'arrêt de la rotation de l'hélice 26 dans une de ses positions angulaires indexées "θi" est enclenché, sinon, l'étape "E1-3" est réitérée.

Le procédé d'arrêt de la rotation de l'hélice 26 dans une de ses positions angulaires indexées "θi" comporte une étape "E1-5" de vérification de la vitesse "Nr" de rotation, au cours de laquelle on vérifie que la vitesse "Nr" de rotation de l'hélice 26 est inférieure ou égale à une vitesse "Nre" de rotation déterminée.

Si la vitesse "Nr" de rotation de l'hélice 26 est supérieure à une vitesse "Nre" de rotation déterminée une étape "E1-6" de freinage est enclenchée. Au cours de l'étape "E1-6" de freinage, le moteur 82 pas à pas est commandé pour produire un couple résistant qui s'oppose à la rotation libre de l'hélice 26 jusqu'à ce que la vitesse "Nr" de rotation de l'hélice 26 soit inférieure ou égale à une vitesse "Nre" de rotation déterminée. La vitesse de "Nr" de rotation de l'hélice 26 est mesurée par des capteurs (non représentés) déjà bien connus qui ne seront pas décrits plus en détails par la suite. A l'issue de cette étape "E1-6" de freinage, l'étape "E1-5" de vérification de la vitesse "Nr" de rotation est réitérée.

Si la vitesse "Nr" de rotation de l'hélice 26 est inférieure ou égale à la vitesse "Nre" de rotation déterminée, une étape "E1-7" de blocage de l'hélice dans une position angulaire indexée est déclenchée. Au cours de cette étape, le moteur 82 pas à pas est commandé pour bloquer l'hélice 26 dans ladite position "θi" angulaire indexée au moyen du moteur 82 pas à pas.

L'étape "E1-7" de blocage est suivie d'une étape "E1-8" de vérification de la position angulaire "θ" de l'hélice 26, ici au moyen du capteur 110 inductif. Si la position angulaire "θ" mesurée de l'hélice 26 est comprise dans l'intervalle de tolérance [θi-λ ; θi+λ] déterminé de part et d'autre de ladite position angulaire indexée "θi", une étape "E1-10" de verrouillage est enclenchée, sinon une étape "E1-9" d'ajustement est enclenchée.

L'étape "E1-9" d'ajustement consiste à commander le moteur 82 pas à pas pour fournir un couple de rotation qui entraîne l'hélice 26 en rotation autour de son axe "X" de rotation vers l'une des positions "θi" angulaires indexées.

Lors de cette étape "E1-9" d'ajustement, l'hélice 26 est entraînée en rotation dans un seul sens. Ainsi, lorsque l'hélice 26 dépasse une position angulaire indexée "θi", le moteur 82 pas à pas entraîne l'hélice 26 en rotation jusqu'à sa prochaine position angulaire indexée "θi".

En variante, l'hélice 26 peut être entraînée en rotation dans les deux sens par le moteur 82 pas à pas de manière à ce que l'hélice 26 tourne vers la position angulaire indexée "θi" la plus proche.

A l'issue de cette étape "E1-9" d'ajustement, l'étape "E1-7" de blocage est réitérée.

Les étapes "E1-9" d'ajustement, "E1-7" de blocage et "E1-8" de vérification sont réitérées jusqu'à ce que la position angulaire "θ" de l'hélice 26 soit comprise dans l'intervalle de tolérance [θi-λ ; θi+λ] déterminé de part et d'autre d'une des positions angulaires indexées "θi".

Lors de l'étape "E1-10" de verrouillage, l'hélice 26 est verrouillée en rotation par rapport à la nacelle 24 dans sa position angulaire indexée "θi" au moyen du dispositif 96 de verrouillage mécanique, comme représenté à la figure 23. Comme, expliqué précédemment, le dispositif 96 de verrouillage permet d'amener précisément l'hélice 26 dans sa position angulaire indexée "θi" grâce à la coopération entre l'organe 104 de verrouillage, commandé vers sa position active, avec les rampes du cran 102.

A l'issue de l'étape "E1-10" de verrouillage, une étape "E1-11" de repliement des pales 32 est enclenchée. Lors de cette étape, les pales 32 sont repliées dans leurs logements 39 respectifs au moyen du dispositif 50 de repliement, comme cela a été décrit précédemment et comme cela est représenté aux figures 4, 7, 9 et 13.

Puis lors d'une étape "E1-12" de vérification du repliement, on vérifie que les pales 32 sont bien repliées au moyen du capteur 72B. Si les pales 32 sont bien en position repliée, le loquet 75 est commandé pour verrouiller les pales 32 en position repliée lors d'une dernière étape "E1-13" de verrouillage, sinon, un incident est signalé au pilote de l'aéronef 20, comme représenté à la référence "E1-14" de la figure 25.

La conception aérodynamique des pales prendra en compte l'exigence du non déploiement intempestif des pales repliées, particulièrement en l'absence d'un verrouillage effectif des pales en position repliée, sous certaines conditions de vol à respecter dans ce cas de panne.

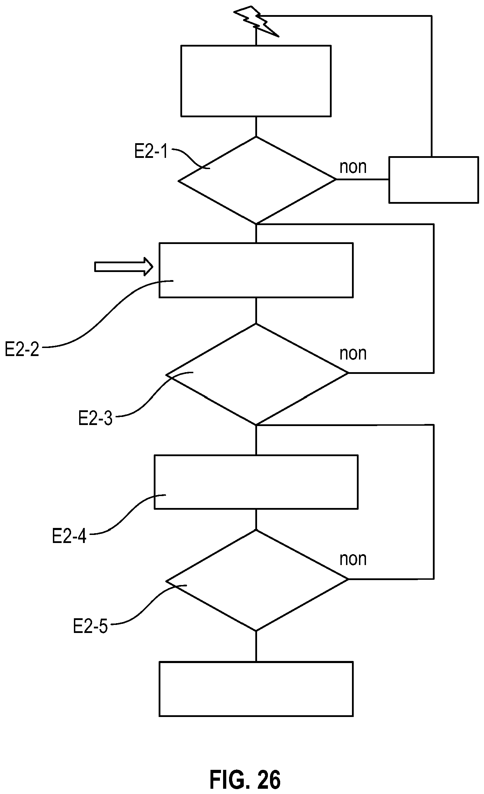

On décrit à présent un procédé de déploiement des pales 32 d'un ensemble propulsif 22 en référence à la figure 26. Un tel procédé est mis en oeuvre par une unité électronique de commande non représentée. Le procédé peut être déclenché soit automatiquement, soit sur ordre manuel du pilote.

Lors d'une première étape "E2-1", on vérifie certaines conditions de vol de l'aéronef 20 à respecter pour pouvoir obtenir l'autorisation de poursuivre le procédé de déploiement des pales 32.

Par exemple, lorsque l'étape "E2-1" est appliquée à un ensemble propulsif 22 de sustentation, on vérifie que la vitesse de l'aéronef 20 décroît et approche d'une vitesse à laquelle sa voilure ne sera plus suffisante pour assurer la force de portance sans poussée de sustentation de la part des ensembles propulsifs 22 de sustentation. On vérifie par exemple que la vitesse "V" d'avancement de l'aéronef 20 décroît jusqu'à une troisième vitesse "V2" de seuil déterminée. Si c'est bien le cas, une étape "E2-2" de déploiement suivante est déclenchée, sinon le procédé de déploiement n'est pas autorisé.

Selon un autre exemple, lorsque l'étape "E2-1" est appliquée à un ensemble propulsif 22 de traction, on vérifie que la vitesse de l'aéronef 20 est inférieure à une vitesse suffisante de croisière économique nécessitant que la totalité des ensembles propulsifs 22 de traction soient utilisés simultanément pour procurer une force de poussée à l'aéronef 20. On vérifie par exemple que la vitesse "V" d'avancement de l'aéronef 20 est bien inférieure à une quatrième vitesse "V3" de seuil déterminée. Les pales 32 des ensembles propulsifs 22 de traction peuvent aussi être déployées lorsque l'aéronef 20 va quitter un vol stationnaire. Si l'une de ces conditions est vérifiée, l'étape "E2-2" suivante est déclenchée, sinon le procédé de déploiement est interrompu.

Lors de l'étape "E2-2" de déploiement, le loquet 75 est escamoté et l'actionneur 50 de repliement est commandé pour déployer les pales 32.

Lors d'une étape "E2-3" suivante de vérification du déploiement, on vérifie, au moyen du capteur 72A de déploiement, que les pales 32 occupent bien leur position déployée. Si c'est le cas, une étape "E2-4" de déverrouillage de l'hélice 26 est enclenchée, sinon, l'étape "E2-2" de déploiement est réitérée.

Lors de l'étape "E2-4" de déverrouillage, l'organe 104 de verrouillage du dispositif 96 de verrouillage mécanique de l'hélice 26 est commandé dans sa position inactive pour libérer la rotation de l'hélice 26.

Lors d'une étape "E2-5" de vérification du déverrouillage, on vérifie que l'hélice 26 est bien déverrouillée en rotation au moyen du capteur 105 de verrouillage. Si c'est le cas, le procédé de déploiement est achevé et l'ensemble propulsif 22 est prêt à être utilisé, sinon, l'étape "E2-4" de déverrouillage est réitérée.

## Revendications

1. Ensemble propulsif (22) à hélice (26) pour un aéronef (20) comportant :
- une nacelle (24) qui est destinée à être fixée sur un élément de structure de l'aéronef (20) ;
- une hélice (26) qui est montée rotative dans la nacelle (24) autour d'un axe (X) de rotation longitudinal par l'intermédiaire d'un moyeu (28), l'hélice (26) comportant des pales (32) dont chacune est montée solidaire en pivotement avec un fût (38) de pale associé qui est monté pivotant autour d'un axe (Y) radial de calage par rapport au moyeu (28), et chaque pale (32) étant montée pivotante par rapport au fût (38) de pale autour d'un axe (Z) de repliement orthogonal à l'axe (Y) radial de calage ;
- un dispositif (50) de repliement qui comporte un actionneur (52) de repliement commandant le pivotement de chaque pale (32) par rapport à son fût (38) de pale entre une position déployée dans laquelle les pales (32) s'étendent radialement par rapport à l'axe (X) de rotation et une position repliée dans laquelle les pales (32) s'étendent globalement longitudinalement contre la nacelle (24) ;
le dispositif (50) de repliement comportant une transmission (54) associée à chaque pale (32), chaque transmission (54) comportant :
- un organe (56) mobile de commande qui est monté solidaire en rotation avec le fût (38) de pale et qui est mu par l'actionneur (52) de repliement, et
- une biellette (58) comportant une première extrémité montée pivotante sur un pied (34) de la pale (32) associée de manière excentrée par rapport à l'axe (Z) de repliement et une deuxième extrémité montée pivotante sur l'organe (56) mobile de commande,
**caractérisé en ce que** l'organe (56) mobile de commande est formé par une manivelle qui est montée pivotante dans le fût (38) de pale autour d'un axe (Z1) de commande parallèle à l'axe (Z) de repliement et **en ce que** le pivotement de l'organe (56) mobile de commande est actionné au moyen d'un engrènement entre un secteur (71) denté de la manivelle et une crémaillère (68) qui est montée coulissante longitudinalement et mue par l'actionneur (52) de repliement.

2. Ensemble propulsif (22) selon la revendication précédente, **caractérisé en ce que** toutes les crémaillères (68) de chacune des transmissions (54) sont fixées sur une tige (64) commune de l'actionneur (52) de repliement qui est coulissante le long de l'axe (X) de rotation entre une première position correspondant à la position déployée des pales (32) et une deuxième position correspondant à la position repliée des pales (32).

3. Ensemble propulsif (22) selon la revendication précédente, **caractérisé en ce qu'**il comporte un dispositif (72A, 72B) de détection de la position de la tige (64) d'actionneur dans sa première position et dans deuxième position.

4. Ensemble propulsif (22) selon l'une quelconque des revendications 2 ou 3, **caractérisé en ce qu'**il comporte un dispositif de verrouillage mécanique de l'organe (56) mobile dans chacune de ses positions correspondant à la position déployée et à la position repliée des pales (32).

5. Ensemble propulsif (22) selon l'une quelconque des revendications précédentes, **caractérisé en ce que** la nacelle (24) est montée fixe sur l'élément de structure de l'aéronef (20).

6. Ensemble propulsif (22) selon l'une quelconque des revendications 1 à 4, **caractérisé en ce que** la nacelle (24) est montée pivotante sur l'élément de structure de l'aéronef (20).

7. Procédé (22) de repliement des pales (32) de l'hélice (26) d'un ensemble propulsif (22) réalisé selon la revendication 3 ou selon l'une quelconque des revendications 4 à 6 prise en combinaison avec la revendication 3, **caractérisé en ce qu'**il comporte une étape (E1-11) de repliement lors de laquelle les pales (32) sont repliées au moyen du dispositif (50) de repliement, puis une étape (E1-12) de vérification du repliement, au cours de laquelle on vérifie que les pales (32) sont bien repliées au moyen du dispositif (72A, 72B) de détection.

8. Procédé selon la revendication précédente prise en combinaison avec la revendication 4, **caractérisé en ce que** si, lors de l'étape (E1-12) de vérification du repliement, les pales (32) sont détectées comme étant en position repliée, le dispositif (75) de verrouillage mécanique est commandé pour verrouiller les pales (32) en position repliée.

## Patentansprüche

1. Antriebsanordnung (22) mit Propeller (26) für ein Luftfahrzeug (20), umfassend:
- eine Gondel (24), die dazu bestimmt ist, an einem Strukturelement des Luftfahrzeugs (20) befestigt zu werden;
- einen Propeller (26), der mittels einer Nabe (28) um eine Längsdrehachse (X) drehbar in der Gondel (24) angebracht ist, wobei der Propeller (26) Blätter (32) umfasst, von denen jedes schwenkfest mit einem ihm zugeordneten Blattschaft (38) angebracht ist, der um eine in Bezug auf die Nabe (28) radiale Feststellpositionsachse (Y) schwenkbar angebracht ist, und wobei jedes Blatt (32) in Bezug auf den Blattschaft (38) um eine zur radialen Feststellpositionsachse (Y) orthogonale Klappachse (Z) schwenkbar angebracht ist;
- eine Klappvorrichtung (50), die einen Klappaktor (52) umfasst, der das Schwenken jedes Blattes (32) in Bezug auf dessen Blattschaft (38) zwischen einer ausgeklappten Position, in der sich die Blätter (32) radial in Bezug auf die Drehachse (X) erstrecken, und einer eingeklappten Position, in der sich die Blätter (32) allgemein in Längsrichtung an der Gondel (24) erstrecken, steuert;
wobei die Klappvorrichtung (50) ein Getriebe (54) umfasst, das jedem Blatt (32) zugeordnet ist, wobei jedes Getriebe (54) umfasst:
- ein bewegliches Steuerorgan (56), das drehfest mit dem Blattschaft (38) angebracht ist und das von dem Klappaktor (52) bewegt wird, und
- einen Schwingarm (58), der ein erstes Ende, das in Bezug auf die Klappachse (Z) exzentrisch schwenkbar an einem Fuß (34) des zugeordneten Blattes (32) angebracht ist, und ein zweites Ende umfasst, das schwenkbar an dem beweglichen Steuerorgan (56) angebracht ist,
**dadurch gekennzeichnet, dass** das bewegliche Steuerorgan (56) von einer Kurbel gebildet wird, die im Blattschaft (38) um eine zur Klappachse (Z) parallele Steuerachse (Z1) schwenkbar angebracht ist, und dadurch, dass das Schwenken des beweglichen Steuerorgans (56) mittels eines Eingriffs zwischen einem gezahnten Sektor (71) der Kurbel und einer Zahnstange (68) betätigt wird, die in Längsrichtung verschiebbar angebracht ist und vom Klappaktor (52) bewegt wird.

2. Antriebsanordnung (22) nach dem vorstehenden Anspruch, **dadurch gekennzeichnet, dass** alle Zahnstangen (68) jedes der Getriebe (54) an einer gemeinsamen Stange (64) des Klappaktors (52) befestigt sind, die entlang der Drehachse (X) zwischen einer ersten Position, die der ausgeklappten Position der Blätter (32) entspricht, und einer zweiten Position, die der eingeklappten Position der Blätter (32) entspricht, verschiebbar ist.

3. Antriebsanordnung (22) nach dem vorstehenden Anspruch, **dadurch gekennzeichnet, dass** sie eine Vorrichtung (72A, 72B) zum Erkennen der Position der Aktorstange (64) in ihrer ersten Position und in ihrer zweiten Position umfasst.

4. Antriebsanordnung (22) nach einem der Ansprüche 2 oder 3, **dadurch gekennzeichnet, dass** sie eine Vorrichtung zum mechanischen Verriegeln des beweglichen Organs (56) in jeder seiner Positionen, die der ausgeklappten Position und der eingeklappten Position der Blätter (32) entsprechen, umfasst.

5. Antriebsanordnung (22) nach einem der vorstehenden Ansprüche, **dadurch gekennzeichnet, dass** die Gondel (24) fest am Strukturelement des Luftfahrzeugs (20) angebracht ist.

6. Antriebsanordnung (22) nach einem der Ansprüche 1 bis 4, **dadurch gekennzeichnet, dass** die Gondel (24) schwenkbar am Strukturelement des Luftfahrzeugs (20) angebracht ist.

7. Verfahren (22) zum Einklappen der Blätter (32) des Propellers (26) einer nach Anspruch 3 oder nach einem der Ansprüche 4 bis 6 in Kombination mit Anspruch 3 ausgeführten Antriebsanordnung (22), **dadurch gekennzeichnet, dass** es einen Schritt (E1-11) des Einklappens, bei dem die Blätter (32) mittels der Klappvorrichtung (50) eingeklappt werden, und anschließend einen Schritt (E1-12) des Überprüfens des Einklappens umfasst, bei dem mittels der Erkennungsvorrichtung (72A, 72B) verifiziert wird, dass die Blätter (32) wirklich eingeklappt sind.

8. Verfahren nach dem vorstehenden Anspruch in Kombination mit Anspruch 4, **dadurch gekennzeichnet, dass**, wenn beim Schritt (E1-12) des Überprüfens des Einklappens erkannt wird, dass sich die Blätter (32) in der eingeklappten Position befinden, die mechanische Verriegelungsvorrichtung (75) so gesteuert wird, dass sie die Blätter (32) in der eingeklappten Position verriegelt.

## Claims

1. A propulsion unit (22) having a propeller (26) for an aircraft (20) comprising:
- a nacelle (24) configured to be attached to a structural element of the aircraft (20);
- a propeller (26) which is rotatably mounted in the nacelle (24) about a longitudinal axis of rotation (X) by means of a hub (28), the propeller (26) comprising blades (32) each of which is mounted in a pivotally fixed manner to an associated blade cuff (38) which is pivotally mounted about a radial pitch axis (Y) with respect to the hub (28), and each blade (32) being pivotally mounted with respect to the blade cuff (38) about a folding axis (Z) orthogonal to the radial pitch axis (Y);
- a folding device (50) which comprises a folding actuator (52) controlling the pivoting of each blade (32) relative to its blade cuff (38) between a deployed position in which the blades (32) extend radially with respect to the axis (X) of rotation and a folded position in which the blades (32) extend generally longitudinally against the nacelle (24);
the folding device (50) comprising a transmission (54) associated with each blade (32), each transmission (54) comprising:
- a movable control member (56) which is mounted in a rotationally fixed manner to the blade cuff (38) and which is moved by the folding actuator (52), and
- a link (58) comprising a first end pivotally mounted on a root (34) of the associated blade (32) eccentrically with respect to the folding axis (Z) and a second end pivotally mounted on the movable control member (56),
**characterised in that** the movable control member (56) is formed by a crank which is pivotally mounted in the blade cuff (38) around of a control axis (Z1) parallel to the folding axis (Z) and **in that** the pivoting of the movable control member (56) is actuated by means of a gearing between a toothed sector (71) of the crank and a rack (68) which is mounted so as to slide longitudinally and driven by the folding actuator (52).

2. The propulsion unit (22) according to the preceding claim, **characterised in that** all the racks (68) of each of the transmissions (54) are attached to a common rod (64) of the folding actuator (52) which is slidable along the axis (X) of rotation between a first position corresponding to the deployed position of the blades (32) and a second position corresponding to the folded position of the blades (32).

3. The propulsion unit (22) according to the preceding claim, **characterised in that** it comprises a device (72A, 72B) for detecting the position of the actuator rod (64) in its first position and second position.

4. The propulsion unit (22) according to any one of claims 2 or 3, **characterised in that** it comprises a device for mechanically locking the movable member (56) in each of its positions corresponding to the deployed position and the folded position of the blades (32).

5. The propulsion unit (22) according to any of the preceding claims, **characterised in that** the nacelle (24) is mounted stationary on the structural element of the aircraft (20).

6. The propulsion unit (22) according to any one of claims 1 to 4, **characterised in that** the nacelle (24) is pivotally mounted on the structural element of the aircraft (20).

7. A method (22) for folding the blades (32) of the propeller (26) of a propulsion unit (22) made according to claim 3 or according to any one of claims 4 to 6 taken in combination with claim 3, **characterised in that** it comprises a folding step (E1-11) during which the blades (32) are folded by means of the folding device (50), then a checking step (E1-12) of the folding, during which it is checked that the blades (32) are indeed folded by means of the detection device (72A, 72B).

8. The method according to the preceding claim taken in combination with claim 4, **characterised in that** if, in the checking step (E1-12) of the folding, the blades (32) are detected as being in a folded position, the mechanical locking device (75) is controlled to lock the blades (32) in the folded position.
